(19) Europäisches Patentamt
European Patent Office
Office européen des brevets

(11) **EP 0 952 388 B1**

(12) **EUROPÄISCHE PATENTSCHRIFT**

(45) Veröffentlichungstag und Bekanntmachung des Hinweises auf die Patenterteilung:
**29.06.2005  Patentblatt 2005/26**

(51) Int Cl.⁷: **F21V 3/04**

(21) Anmeldenummer: **99107982.3**

(22) Anmeldetag: **22.04.1999**

(54) **Mehrschichtige Abdeckung für Mehrfunktions-Rückleuchten an Strassenfahrzeugen**

Laminated cover for motor vehicle multifunction tail lights

Couvercle multicouche de feux arrières à fonctions multiples pour véhicules routiers

(84) Benannte Vertragsstaaten:
**AT DE ES FR GB IT PT**

(30) Priorität: **22.04.1998  DE 19818009**

(43) Veröffentlichungstag der Anmeldung:
**27.10.1999  Patentblatt 1999/43**

(73) Patentinhaber: **JOHN MCGAVIGAN LIMITED Kirkintilloch Glasgow, G66 3UW Scotland (GB)**

(72) Erfinder: **Munro, Alastair Hunter Mount Vernon, Glasgow G32 9QU (GB)**

(74) Vertreter: **Brehm, Hans-Peter et al Patent- und Rechtsanwälte Hansmann & Vogeser Albert-Rosshaupter-Strasse 65 81369 München (DE)**

(56) Entgegenhaltungen:
EP-A- 0 371 425          DE-A- 2 721 885
DE-A- 2 726 933          DE-C- 4 141 694
FR-A- 2 283 391          US-A- 4 654 758

**Beschreibung**

Die vorliegende Erfindung betrifft eine mehrschichtige Abdeckung für Mehrfunktions-Rückleuchten an Straßenfahrzeugen nach dem Oberbegriff des Anspruches 1.

Mehrfunktions-Rückleuchten für Straßenfahrzeuge sind beispielsweise in den Dokumenten DE 41 41 694 C1 und DE 27 26 933 C2 bschrieben. In verschiedenen Abschnitten oder Zonen einer solchen Rückleuchte sind realisiert die passive Funktion des Rückstrahlers sowie die aktiven Funktionen des Fahrtrichtungsanzeigers, der Bremsleuchte, der Schlußleuchte und wahlweise des Rückfahrscheinwerfers und der Nebelschlußleuchte. Den aktiven Funktionen ist je eine Lichtquelle zugeordnet, deren Lichtstrahlen typischerweise an je einem Reflektor angenähert parallel ausgerichtet wird. Die so erzeugten Lichtbündel durchdringen eine im Strahlengang nachgeschaltete Lichtscheibe, welche einen wesentlichen Bestandteil der hier betrachteten Abdeckung oder Haube einer Kraftfahrzeug-Rückleuchte bildet. Der Rückstrahler muß unter anderem bestimmte Farbmerkmale und lichttechnische Werte gewährleisten, die in der Regelung ECE-R3 festgehalten sind. Die Anforderungen an Fahrtrichtungsanzeiger sind in der Regelung ECE-R6, die Anforderungen an Schlußleuchten und Bremsleuchten in der Regelung ECE-R7, die Anforderungen an Rückfahrscheinwerfer in der Regelung ECE-R23 und die Anforderungen an Nebelschlußleuchten in der Regelung ECE-R38 festgelegt. Zu typischen Anforderungen gehören die Farbe des ausgestrahlten Lichtes und bestimmte Mindest- und Höchst-Lichtstärken, die in der nachstehenden Tabelle zusammengestellt sind:

| Funktion | Mindest-Lichtstärke in der Bezugsachse | Höchst-Lichtstärke in jeder sichtbaren Richtung |
|---|---|---|
| Fahrtrichtungsanzeiger | 50 cd | 350 cd |
| Schleußleuchte | 4 cd | 12 bzw. 17 cd |
| Bremsleuchte | 60 cd | 185 bzw. 260 cd |
| Rückfahrscheinwerfer | 80 cd | oberhalb der Horizontalebene nicht mehr als 300 cd |
| | | unterhalb der Horizontalebene nicht mehr als 600 cd |
| Nebelschlußleuchte | 150 cd* | 300 cd |

*wobei die sichtbare leuchtende Fläche in Richtung der Bezugsachse 140 cm$^2$ nicht übersteigen darf.

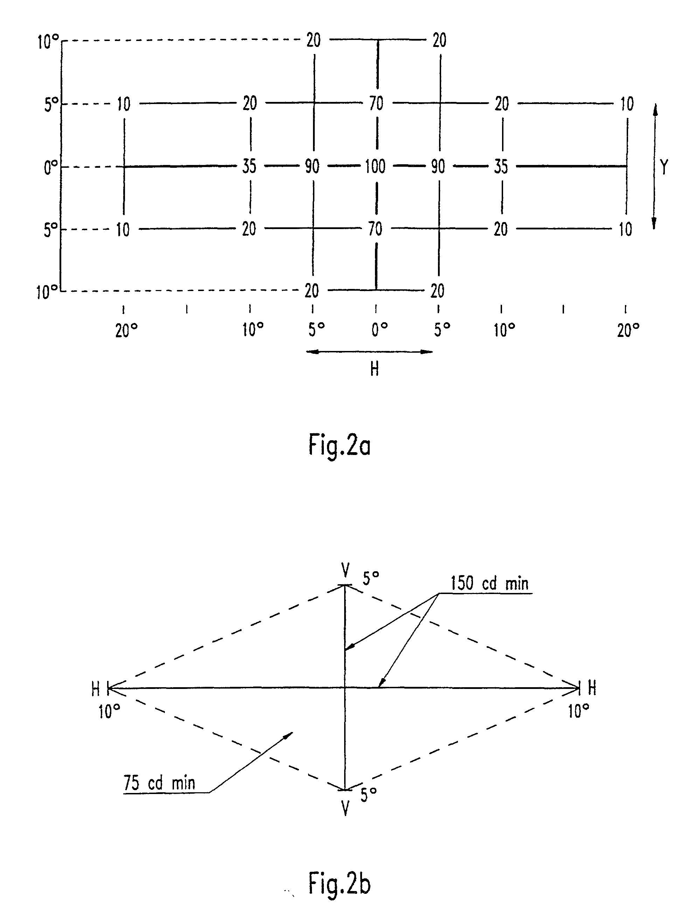

Die Mindest-Lichtstärke muß nicht nur in der Bezugsachse die vorstehend genannten Werte erreichen, sondern es müssen ebenfalls in bestimmten Feldern um die Bezugsachse herum noch bestimmte Werte erreicht werden, wie aus der vereinheitlichten räumlichen Lichtverteilung gemäß Figur 2a ersichtlich ist; für Nebelschlußleuchten muß mindestens die Mindestlichtstärken-Verteilung gemäß Figur 2b erreicht werden. Ersichtlich ergeben sich für Nebelschlußleuchten die "härtesten" Anforderungen, weil einerseits der absolute Abstand zwischen Mindest-Lichtstärke und Höchst-Lichtstärke vergleichsweise gering ist, und andererseits die Mindest-Lichtstärke in einem vergleichsweise großen Bereich um die Bezugsachse herum gewährleistet werden muß.

Zusammenfassend erfordert die "vereinheitlichte räumliche Lichtverteilung" in einem gegebenen horizontalen Winkel zur Bezugsachse höhere Mindestlichtstärken, als in dem gleichen Vertikalwinkel. Anders ausgedrückt heißt dies, daß in horizontaler Richtung das im wesentlichen parallele Lichtbündel in einem größeren Winkel abgelenkt bzw. gestreut werden muß, als in vertikaler Richtung. Zur Gewährleistung dieser in unterschiedliche Raumrichtungen unterschiedlichen Lichtstreuung sind an der auf die Lichtquelle zu zeigenden "Innenfläche" der bekannten Lichtscheiben einstückig bestimmte lichtstreuende optische Elemente angeformt, beispielsweise bestimmte Zylinder- oder Tcruslinsen und/oder eine bestimmte Prismenoptik. Insbesondere mit Bezugnahme auf Nebelschlußleuchten ist die Gestalt und Anordnung solcher lichtstreuenden optischen Elemente beispielsweise in der Deutschen Auslegeschrift 17 55 770, in der Deutschen Patentschrift DE 30 08 773 C2 oder in der Deutschen Patentschrift DE 42 42 527 C2 beschrieben.

In die Abdeckung einer Mehrfunktions-Rückleuchte sind die verschiedenen Lichtscheiben zur Gewährleistung der vorstehend dargelegten Funktionen integriert. Bekannte Abdeckungen bestehen beispielsweise aus Polymethylmethacrylat (PMMA) oder anderen thermoplastisch verarbeitbaren Spritzgußmassen. Die Erzeugung der einerseits farblosen und andererseits verschiedenfarbigen Lichtscheibenabschnitte an einem einstückigen Formkörper erfordert mehrstufige Einspritzverfahren. Die Erzeugung der lichtstreuenden optischen Elemente an den verschiedenen Lichtscheiben erforderte aufwendige und teure Spritzgußformen. Die bekannten, mehrstufigen Spritzgußverfahren zur Erzeugung dreidimensional verformter Kunststoff-Abdeckungen für Mehrfunktions-Rückleuchten lassen nicht zu, daß an Vorstufen oder am Fertigteil bestimmte Funktionen mit Hilfe drucktechnischer Maßnahmen realisiert werden. Aus den genannten Gründen ist die bekannte Herstellung von Abdeckungen für Mehrfunktions-Rückleuchten aufwendig und teuer.

Das Dokument EP 0 371 425 B1 offenbart ein Verfahren zur Herstellung tiefgezogener Kunststoff-Formteile, wobei kaltreckbares Folienmaterial bei einer Arbeitstemperatur unterhalb der Erweichungstemperatur des Folienmaterials mit Hilfe eines fluiden Druckmittels unmittelbar und direkt beaufschlagt und isostatisch verformt wird. Die Besonderheit dieses sogenannte Höchstdruck-Verformungsverfahrens besteht darin, daß der Druckmitteldruck mehr als 20 bar beträgt, und die Verformung des Folienmaterials innerhalb einer Zeitspanne kleiner als 5 sec durchgeführt wird; typischerweise wird die Verformung des Folienmaterials schlagartig bei einer Arbeitstemperatur zwischen 80 und 130°C durchgeführt. Die so erhältlichen Tiefziehteile, die wahlweise mit weiterem Kunststoff verstärkt werden können, weisen typischerweise unterschiedlich gefärbte und/oder transparente Wandabschnitte auf und können beispielsweise als Gehäuseteil, Leuchtzeichen- oder Instrumenten-Abdeckung, beleuchtbare Druck- oder Schalter-Tasten, Heizblenden, Amaturenbrett-(Abschnitte) oder Rückleuchtenlinsen in Kraftfahrzeugen eingesetzt werden. Diese Druckschrift enthält keine weiteren Angaben dazu, wie im einzelnen nach diesem Höchstdruck-Verformungsverfahren eine mehrschichtige Abdeckung für Mehrfunktions-Rückleuchten erzeugt werden kann, in welche die verschiedenen, an die jeweiligen Funktionen angepaßten Lichtscheiben integriert sind.

Davon ausgehend besteht die Aufgabe der vorliegenden Erfindung darin, eine nach dem Höchstdruck-Verformungsverfahren gemäß EP 0 371 425 B1 erhältliche, mehrschichtige Abdeckung für Mehrfunktions-Rückleuchten an Straßenfahrzeugen bereitzustellen, wobei die Abdeckung angepaßte Lichtscheibenabschnitte aufweist, um die jeweiligen Funktionen gemäß den ECE-Regelungen zu erfüllen.

Ausgehend von einer mehrschichtigen Abdeckung für Mehrfunktions-Rückleuchten an Straßenfahrzeugen, wobei die Abdeckung wenigstens aufweist:

- eine drei-dimensional verformte Kunststoff-Folie, die durch Verformung einer ursprünglich ebenen, mit einer einlagigen oder mehrlagigen, farblich an die jeweilige Rückleuchtenfunktion angepaßten Beschichtung versehenen Folie nach dem Höchstdruck-Verformungsverfahren gemäß EP 0 371 425 B1 erhältlich ist, und

- wenigstens eine Verstärkungsschicht aus Kunststoff, die - nach ihrer Verformung - an die drei-dimensional verformte Kunststoff-Folie angespritzt worden ist,

ist die erfindungsgemäße Lösung obiger Aufgabe dadurch gekennzeichnet, daß

die Kunststoff-Folie und/oder wenigstens ein Abschnitt von wenigstens einer Lage der Beschichtung als Streulichtscheibe ausgebildet ist, die für rotes Licht der Wellenlänge 0,7 μm einen Halbwertswinkel größer/gleich 10° aufweist.

Die Erfindung vermeidet die fabrikationstechnisch aufwendige Erzeugung der einstückig angeformten, lichtstreuenden optischen Elemente an der Innenfläche herkömmlicher Lichtscheiben. Statt dessen wird erfindungsgemäß die vorschriftsmäßige Lichtstreuung erzielt durch Anwendung wenigstens einer Streulichtscheibe mit einem bestimmten Streuverhalten. Die ausgewählte(n), auf der Kunststoff-Folie aufgebrachte(n) Lage(n), Schicht(en) und/oder Beschichtung(en) können mit Hilfe drucktechnischer Maßnahmen oder mit Hilfe von Maßnahmen der Beschichtungstechnik aufgebracht werden. Damit bringt die Erfindung ganz erhebliche Vereinfachungen und Kostensenkungen bei der Herstellung von aus Kunststoff bestehenden Abdeckungen für Mehrfunktions-Rückleuchten an Straßenfahrzeugen.

Nachstehend wird die Erfindung mehr im einzelnen mit Bezugnahme auf die Zeichnungen erläutert; die letzteren zeigen:

| | |
|---|---|
| Figur 1 | eine perspektivische Darstellung einer Abdeckung einer Mehrfunktions-Rückleuchte an der rechten Seite eines Pkw; |
| Figur 2a | die nach den Regelungen ECE-R6 und ECE-R23 geforderte vereinheitlichte räumliche Lichtverteilung für die Mindest-Lichtstärke bei Fahrtrichtungsanzeigern, Bremsleuchten und Schlußleuchten; |
| Figur 2b | die nach der Regelung ECE-R38 erforderliche Mindest-Lichtstärken-Verteilung für Nebelschlußlauchten; |
| Figur 3 | schematisch die Ermittlung des "Halbwertswinkels"; |
| Figur 4 | in schematischer Darstellung den mehrschichtigen Aufbau einer erfindungsgemäß bevorzugten Abdeckung; und |

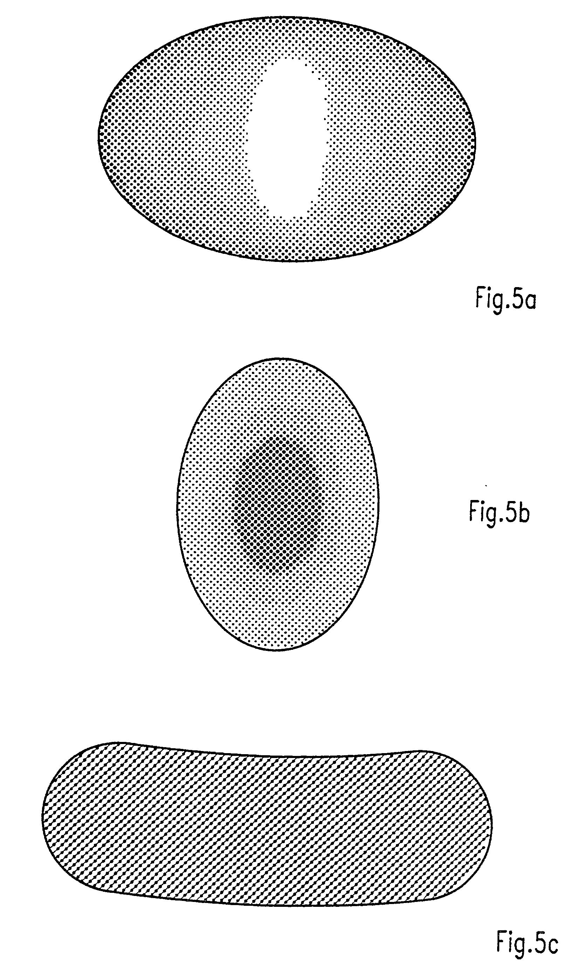

Figur 5a, 5b und 5c    verschiedene Ausführungsformen einer Lichtausgleichsschicht.

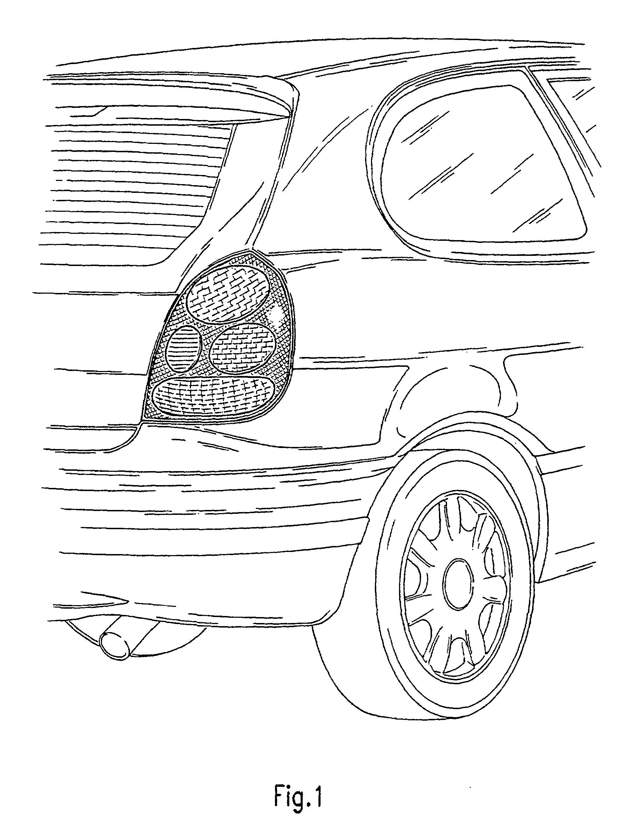

Figur 1 zeigt eine bekannte Mehrfunktions-Rückleuchte an einem Pkw (TOYOTA). Ersichtlich erstreckt sich die Abdeckung aus der Heckfront bis in die Seitenfront, um so den geforderten Anzeigebereich von 80° mit der Bezugsachse (Fahrtrichtung) zu gewährleisten. Die Rückleuchte umfaßt verschiedene, deutlich voneinander abgegrenzte Zonen, welche den verschiedenen Funktionen zugeordnet sind. Die im vorliegenden Falle rund oder elyptisch begrenzten Zonen befinden sich innerhalb eines Bereiches mit gegebener Hintergrundstruktur, die an eine Waben- oder Perlenschnur-Struktur erinnert. Die Abdeckung bzw. Haube einer solchen Mehrfunktions-Rückleuchte bildet einen dreidimensionalen Formkörper, der typischerweise aus Kunststoff besteht.

Bekannte Rückleuchtenabdeckungen weisen eine vergleichsweise kompliziert geformte nicht-ebene Innenseite auf, an der einstückig lichtstreuende optische Elemente angeformt sind, um die vorgeschriebene räumliche Lichtverteilung zu gewährleisten. Figur 2a zeigt die nach den ECE-Regelungen geforderte "vereinheitlichte räumliche Lichtverteilung" der Mindest-Lichtstärke bei Fahrtrichtungsanzeigern, Bremsleuchten und Schlußleuchten; Figur 2b zeigt die entsprechende Mindest-Lichtstärken-Verteilung für Nebelschlußleuchten.

Die Richtung H = 0° und V = 0° entspricht der Bezugsachse; diese verläuft am Fahrzeug horizontal und parallel zur Fahrzeuglängsmittelebene in der für die Sichtbarkeit vorgeschriebenen Richtung und geht durch den Bezugspunkt. Die in dem Schema angegebenen Werte geben für die verschiedenen Meßrichtungen die Mindestwerte (in Prozent) des für jede Leuchte geforderten Mindestwerts in der Achse (Richtung) H = 0° und V = 0°) an. Innerhalb des durch ein Raster schematisch dargestellten Bereichs der Lichtverteilung soll die Lichtverteilung im wesentlichen gleichmäßig sein, d.h. die Lichtstärke in jeder Richtung eines Teils des durch die Linien des Rasters gebildeten Bereichs muß mindestens dem niedrigsten vorgeschriebenen Mindestwert (in Prozent) erreichen, der auf den Linien angegeben ist, die die betreffende Richtung begrenzen. Die Lichtverteilung ist an einem Projektionsschirm zu ermitteln, der in einem solchen Abstand zur Rückleuchte angeordnet ist, daß hinsichtlich der Lichtintensität das Gesetz der Abhängigkeit vom Quadrat der Entfernung gilt; weitere Einzelheiten sind aus den ECE-Regelungen ersichtlich.

Erfindungsgemäß wird die vorgeschriebene Mindest-Lichtstärken-Verteilung erzielt durch Anwendung wenigstens einer Streulichtscheibe, die für rotes Licht einer Wellenlänge von 0,7 μm einen Halbwertswinkel größer/gleich 10° aufweist. Die Fachwelt versteht in diesem Zusammenhang unter Halbwertswinkel, denjenigen von der Senkrechten abweichenden Winkel, bei welchem die Lichtintensität eines senkrecht auf die Streulichtscheibe auftreffenden und diese durchdringenden Lichtstrahls einer punktförmigen Lichtquelle auf die Hälfte der Lichtintensität abgenommen hat, die am senkrecht aus der Streulichtscheibe austretenden Lichtstrahl ermittelt wird.

Eine weitergehende Erläuterung und ein Versuchsaufbau zur Bestimmung des Halbwertwinkels findet sich beispielsweise bei U. Veibel, Farbe und Lacke, 73, S. 743-749 (1967).

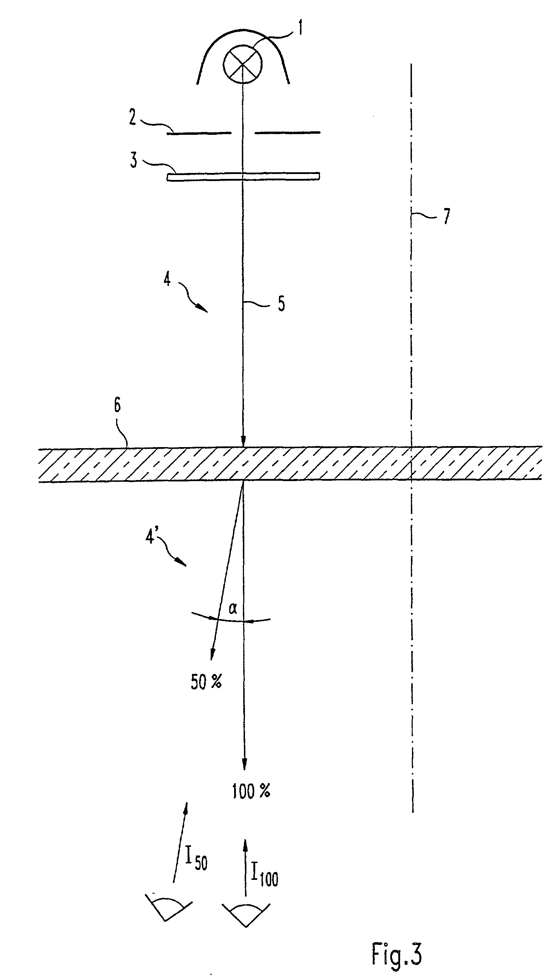

Die Figur 3 zeigt schematisch die Ermittlung dieses Halbwertwinkels. Aus dem Licht einer Lichtquelle 1 wird mit Hilfe einer Lochblende 2 ein im wesentlichen paralleles Lichtbündel ausgeblendet, das ein Farbfilter 3 durchdringt, das im wesentlichen nur rotes Licht der Wellenlänge 0,7 μm passieren läßt. Dieses Lichtbündel 4 trifft auf eine senkrecht zur Lichtbündelachse 5 angeordnete Streulichtscheibe 6 und durchdringt diese. Folglich verläuft die Lichtbündelachse 5 parallel zu einer Senkrechten 7 auf die Streulichtscheibe 6. Das in der ursprünglichen Lichtbündelachse 5 aus der Streulichtscheibe 6 austretende Lichtbündel 4' weist in der zur Senkrechten bzw. ursprünglichen Lichtbündelachse 4 parallelen Beobachtungsrichtung $I_{100}$ eine relative Lichtintensität von 100% auf. Beim Durchtritt durch die Streulichtscheibe 6 wird ein Teil des Lichtes aus dem Lichtbündel 4 gestreut. Die Intensität des beobachtbaren gestreuten Lichtes ist um so kleiner, je größer der Winkel zwischen Beobachtungsrichtung und ursprünglicher Lichtbündelachse 5 (Senkrechte auf die Streulichtscheibe) ist. Als Halbwertswinkel $\alpha$ wird derjenige Winkel der Beobachtungsrichtung $I_{50}$ mit der Senkrechten 7 bezeichnet, in welcher das gestreute, beobachtbare Licht gerade noch eine Intensität von 50 % der Intensität des in Richtung der ursprünglichen Lichtbündelachse 5 beobachtbaren Lichtes hat. Ersichtlich ist dieser Halbwertswinkel $\alpha$ ein Maß für das Streuvermögen der Streulichtscheibe 6.

Als "Streulichtscheiben" bezeichnet die Fachwelt ebene oder drei-dimensional verformte Gebilde mit Wandstärken von 0,005 bis 20 mm, die einen senkrecht auf die Streulichtscheiben-Oberfläche auftreffenden Lichtstrahl beim Durchgang durch bzw. Austritt aus der Streulichtscheibe aus seiner Richtung ablenken.

Zusätzlich zu dem bestimmten Streuvermögen entsprechend einem Halbwertswinkel größer/gleich 10° soll eine für die vorliegende Erfindung geeignete Streulichtscheibe eine möglichst hohe Lichtdurchlässigkeit ID aufweisen. Bezugnehmend auf Figur 3 entspricht diese Lichtdurchlässigkeit ID (%) dem Quotienten der

$$ID = \frac{\text{Intensität } I_{100} \text{ des senkrecht aus der Streuplatte austretenden Lichtstrahls}}{\text{Intensität } I_{U} \text{ des senkrecht auf die Streuplatte auftreffenden Lichtstrahls}} \times 100\ \%$$

Im Rahmen der Erfindung soll diese Lichtdurchlässigkeit vorzugsweise mehr als 70 %, besonders bevorzugt mehr als 75 % betragen. Eine hohe Lichtdurchlässigkeit führt zu einer geringen Lichtabsorption beim Durchgang durch die Rückleuchtenabdeckung. Die vorschriftsmäßigen Mindest-Lichtstärken können mit den vorgeschriebenen Lichtquellen erreicht werden.

Streulichtscheiben der hier betrachteten Art können beispielsweise dadurch erhalten werden, daß Streupartikel in einer transparenten Matrix dispergiert werden. Als transparente Matrix kommt die transparente Kunststoff-Folie und/oder wenigstens eine transparente Lage bzw. Schicht der Beschichtung auf dieser Folie in Betracht. Für die vorliegende Erfindung geeignete Streulichtscheiben sind an und für sich bekannt und beispielsweise in der Deutschen Auslegeschrift 27 21 885 beschrieben. Im Rahmen der vorliegenden Erfindung werden als Streupigmente vorzugsweise Glaskugeln mit einem Durchmesser von 2 bis 5 μm, oder die zur Mikroverkapselung eingesetzten Hohlkugeln, insbesondere solche "Nanokapseln" mit Durchmessern im Nanometer-Bereich, sowie weiße oder farblose Perlglanzpigmente wie etwa die bekannten IRIODIN-Pigmente ("IRIODIN" ist eine Marke/Handelsbezeichnung der Fa. Merck, Darmstadt) mit einem mittleren Partikeldurchmesser kleiner/gleich 5 μm eingesetzt. Die erfindungsgemäß vorgesehe-nen Folien- und Kunststoff- Materialien, Lackbindemittel und Streupigmente weisen je unterschiedliche Brechungsindizes $n_{D20}$ auf. Durch gezielte Auswahl dieser Materialien, Lackbindemittel und Streupigmente anhand ihrer Brechungsindizes kann das Streuvermögen des erfindungsgemäß vorgesehenen mehrschichtigen Aufbaus stark beeinflußt und in einem weiten Bereich eingestellt werden. Anzustreben sind Δn-Werte größer/gleich 0,5.

Für die drei-dimensional verformte Kunststoff-Folie wird ein transparentes Folienmaterial ausgewählt. Das Licht aus der Lichtquelle soll das Folienmaterial möglichst ungehindert durchdringen können. Eine hohe Transparenz und dami eine hohe Lichttransmission soll insbesondere für Licht mit Wellenlängen im sichtbaren Bereich gegeben sein. Es können sowohl duroplastishe wie thermoplastische transparente Folienmaterialien eingesetzt werden. Vorzugsweise werden thermoplastische Folienmaterialien eingesetzt, weil diese wegen ihrer typischerweise niedrigeren Glasübergangstemperatur ein besseres Kalt-Verformungsverhalten aufweisen, als duroplastische Materialien. Zu vorzugsweise eingesetzten, transparenten und thermoplastischen Folienmaterialien gehören beispielsweise aromatische Polycarbonate mit Molekulargewichten von 25.000 bis 200.000, insbesondere mit Molekulargewichten von 30.000 bis 120.000 wie etwa die von BAYER AG vertriebene Polycarbonatfolie ("MAKROFOL") oder Folien aus Styrol-Acrylnitril-Copolymerisat mit Molekulargewichten von 10.000 bis 600.000, die beispielsweise von BAYER/MONSANTO unter der Handelsbezeichnung "LUSTRAN" vertrieben werden, sowie Folien aus Polymethylmethacrylat mit Molekulargewichten von 10.000 bis 300.000, wie etwa die von der Firma RÖHM unter der Handelsbezeichnung "PLEXIGLAS" vertriebenen Folien.

Für diese thermoplastischen, transparenten Kunststoff-Folien wird vorzugweise eine Schichtdicke von 50 bis 700 μm vorgesehen. Bei Schichtdicken unter 50 μm ist die Handhabung erschwert; Schichtdicken oberhalb 700 μm verursachen einen unnötig hohen Verformungswiderstand. Gut bewährt haben sich Schichtdicken von etwa 100 bis 500 μm, die vorzugsweise angewandt werden. Innerhalb dieser Grenzen werden die höheren Schichtdicken bevorzugt, weil dem transparenten Folienmaterial auch eine Lichtleiterwirkung zukommt, und höhere Schichtdicken diese Lichtleiterwirkung verbessern.

Im Rahmen der Erfindung kann die Streulichtscheiben-Wirkung dadurch erzielt werden, daß in das transparente Folienmaterial der drei-dimensional verformten Kunststoff-Folie zusätzlich ausgewählte Streupigmente in der erforderlichen Menge eingearbeitet sind. Vorzugsweise werden Streupigmente mit einem besonders hohen Streuvermögen für sichtbares Licht ausgewählt, um eine Streulichtscheibe mit hohem Streuvermögen und hoher Lichtdurchlässigkeit zu erhalten. Grundsätzlich gilt, daß die Partikelabmessungen klein sein sollen bezüglich der Wellenlänge des zu streuenden Lichtes. Auch werden vorzugsweise farblose Streupigmente eingesetzt, um Auswirkungen auf die Farbe der bestimmten Zone der Rückleuchtenabdeckung zu vermeiden. Gut geeignete Streupigmente im Rahmen der vorliegenden Erfindung sind beispielsweise

- (Voll)Glaskugeln aus E-Glas (alkaliarmes, wasserbeständiges Borosilicat-Glas für die Herstellung von Glasfasern) mit einem Durchmesser von 2 bis 5 μm;

- transparente Hohlkugeln aus Glas oder anderen dauerhaften Werkstoffen, die typischerweise zur Mikroverkapselung eingesetzt werden und insbesondere Durchmesser kleiner 1 μm aufweisen (so-genannte Nano-Kapseln);

- farblose oder weiße Perlglanzpigmente mit einem mittleren Partikeldurchmesser kleiner/gleich 5 μm, beispiels-weise die von MERCK, Darmstadt vertriebenen IRIODIN-Pigmente auf Basis von Glimmer und/oder Titandioxid.

Derartige Streupigmente werden vorzugsweise eingesetzt. Eine erfindungsgemäße Kunststoff-Folie kann beispielsweise etwa 5 bis 30 Gew.-% dieser Streupigmente enthalten - bezogen auf das Gesamtgewicht von Folienmaterial und Streupigment -, um ein Streuvermögen aufzuweisen, das einem Halbwertswinkel von größer/gleich 10° entspricht.

Alternativ kann die erfindungsgemäß vorgesehene Streulichtscheiben-Wirkung dadurch erreicht werden, daß auf der transparenten Streupiment-freien Folie eine oder mehrere Lackschicht(en) aufgetragen werden, welche in einem transparenten Lackbindemittel die vorstehend genannten lichtstreuenden Partikel bzw. Pigmente enthalten. Weil solche Lackschichten typischerweise nur Schichtstärken im µm-Bereich, typischerweise Schichtstärken kleiner als 10 µm aufweisen, müssen höhere Pigmentfüllungen vorgesehen werden. Typischerweise enthalten entsprechende Lacke 30 bis 50 Gew.-% Streupigmente. Als Bindemittel kommen vorzugsweise physikalisch trocknende Lackbindemittel auf Acrylatbasis, gegebenenfalls auch PU-modifizierte Acrylat-Lackbindemittel in Betracht. Ein solcher, ein Streupigment enthaltender Lack kann vorzugsweise als Klarlack konfektioniert sein, der keine Farbpigmente enthält. Die Streufunktion muß an der Rückleuchtenabdeckung erzeugt werden, unabhängig von der Signalfarbe einer bestimmten Funktionszone.

Die Anwendung eines, das Streupigment enthaltenden Klarlackes schafft auch die Möglichkeit, lediglich auf einem ausgewählten Abschnitt der Kunststoff-Folie eine Beschichtung mit Streulichtscheiben-Wirkung aufzubringen. In diesem Falle weist lediglich ein Abschnitt von wenigstens einer Lage bzw. Schicht auf der Kunststoff-Folie die Streulichtscheiben-Wirkung auf. Weiterhin ist es möglich, durch mehrmaligen abschnittsweisen Auftrag eines solchen Streupigment enthaltenden Klarlackes auf der Kunststoff-Folie Bereiche mit unterschiedlichem Streuvermögen zu schaffen.

Nach einer weiteren Alternative enthält die transparente Kunststoff-Folie Streupigmente und dient als Träger für wenigstens einen Abschnitt einer weiteren Lage bzw. Schicht, die ebenfalls Streupigmente enthält. Vorzugsweise ist eine solche Anordnung und Verteilung der Streupigmente vorgesehen, daß die geforderte Lichtablenkung mit einem minimalen Anteil an Streupigmenten erzielt wird. Die durch die Anwesenheit der Streupigmente verursachte Verringerung der Lichtintensität soll möglichst gering gehalten werden.

Ergänzend und zusätzlich zu wenigstens einer Lage bzw. Schicht mit Streulichtscheiben-Wirkung kann eine weitere Lichtablenkung durch die Lichtleitung innerhalb des transparenten Kunststoffes der Verstärkungsschicht und/ oder durch Lichtbeugungseffekten an Grenzflächen mit unterschiedlichem Brechungsindex erzielt werden. Hierzu können zur Erzeugung der mehrlagigen Beschichtung auf der Kunststoff-Folie unterschiedliche Lackbindemittel eingesetzt werden, die sich in ihrem Brechungsindex unterscheiden. Beispielsweise kann unmittelbar auf der Kunststoff-Folie eine Beschichtung auf Acrylatbasis aufgebracht werden, die einen Brechungsindex von etwa 1,20 aufweist, und abschließend kann eine Beschichtung auf Polyarylat-Basis aufgebracht werden, die einen Brechungsindex von etwa 1,54 aufweist. An den Grenzflächen dieser Schichten wird jeweils Lichtbeugung und damit Lichtablenkung auftreten. Jedoch läßt sich allein mit Lichtbeugungseffekten die Streulichtscheiben-Wirkung entsprechend einem Halbwertswinkel von 10° nicht erzielen. Zusätzlich zu den Lichtbeugungseffekten ist daher wenigstens eine Schicht mit Streulichtscheiben-Wirkung erforderlich.

Als weiteren notwendigen Bestandteil umfaßt die ein- oder mehrlagige Beschichtung der Kunststoff-Folie eine oder mehrere Farbschichten, die entsprechend der jeweiligen Signalfarbe der Rückleuchtenfunktion eingefärbt sind. Eine solche Farbschicht wird typischerweise auf der ebenen Kunststoff-Folie im Siebdruck oder im Offsetdruck aufgebracht. Häufig kann daher eine einzige Farbschicht ausreichen, die in verschiedenen Abschnitten unterschiedliche Farben (einschließlich eines farblosen Abschnittes für den Rückfahrscheinwerfer) entsprechend der jeweiligen Rückleuchtenfunktion aufweist. Als Farbstoffe bzw. Pigmente für diese Farbschichten kommen beispielsweise nachstehende Pigmente in Betracht:

-   Die von HOECHST AG, Frankfurt unter den Handelsbezeichnungen PV-Echt-Rot, PV-Echt-Rosa, PV-Echt-Gelb und PV-Echt-Grün vertriebenen Pigmente;

-   die von BASF, Ludwigshafen unter den Handelsbezeichnungen Paliogen-Rot oder Paliotol-Gelb vertriebenen Pigmente;

-   die von CIBA-GEIGY, Basel unter den Handelsbezeichnungen Irgazin-Orange, Irgazin-Gelb sowie Irgalith-Blau vertriebenen Pigmente.

Als Bindemittel für diese Farbschichten kommen insbesondere Bindemittel auf Acrylat-Basis, Bindemittel auf Polyarylat-Basis, Bindemittel auf Polyurethan-Basis und PU-modifizierte Acrylate in Betracht. Bei der Auswahl der Bindemittel ist auch darauf zu achten, daß diese Farbschicht(en) die nachfolgende Umformung der bedruckten Kunststoff-Folie bei Temperaturen zwischen etwa 80 und 130°C ohne Rißbildung, Abplatzen und dergleichen mitmachen, sowie das anschließende Anspritzen der Verstärkungsschicht, ohne Beeinträchtigung aushalten. Vorzugsweise können hier hochtemperaturbeständige, flexible Siebdruckfarben eingesetzt werden, die beispielsweise in dem Dokument EP 0 688 839 A2 beschrieben sind.

Diese Farbschichten können nur auf einer Seite der Kunststoff-Folie oder auf beiden Seiten der Kunststoff-Folie vorgesehen werden. Vorzugsweise befinden sich diese Farbschichten zwischen einerseits der Kunststoff-Folie und andererseits der Verstärkungsschicht. In diesem Falle sind die Farbschichten sandwich-artig zwischen zwei Kunststoffschichten untergebracht und so vor mechanischen Einwirkungen und Witterungseinflüssen geschützt.

Mit der Kombination aus Streulichtscheibe(n) und Farbschichten können die aktiven Funktionen einer Mehrfunktions-Rückleuchten-Abdeckung verwirklicht werden. Die "passive" Funktion des Rückstrahlers kann mit Hilfe einer lichtreflektierenden Schicht erzeugt werden, die auf der Kunststoff-Folie oder auf einer der anderen Farbschichten aufgebracht ist. Eine solche lichtreflektierende Schicht kann beispielsweise eine Lackschicht sein, die in einem zur Erzielung der Reflexionswirkung erforderlichen Ausmaß mit Glanzpigmenten gefüllt ist. Als solche Glanzpigmente kommen beispielsweise Aluminium- oder Silberbronzen, metallisierte Glaskugeln und die bereits genannten Perlglanzpigmente in Betracht.

Zusätzlich kann wahlweise eine Schutzschicht vorgesehen werden, welche vor UV-Strahlung schützt und/ oder welche die Kratzfestigkeit erhöht. Eine solche kombinierte Schutzschicht kann beispielsweise dadurch erhalten werden, daß eine 30 %-ige Lösung von Polyvinylidenfluorid gelöst in DMF/Isophoron auf der Kunststoff-Folie oder auf einer Streupigment enthaltenden Klarlackschicht aufgebracht wird. Vorzugsweise wird eine solche Schutzschicht als Außenschicht benachbart zur Lichtquelle vorgesehen.

Weiterhin kann es häufig zweckmäßig sein, zusätzlich und wahlweise eine Lichtausgleichsschicht vorzusehen. Mit Hilfe einer solchen "Lichtausgleichsschicht" kann in bestimmten Bereichen die Lichtstärke kontrolliert und/ oder können bestimmte Muster erzeugt werden. Typischerweise ist eine solche Lichtausgleichsschicht mit einem, einem vorgegebenen Muster folgenden Rasterdruck versehen, um in bestimmten Bereichen lichtundurchlässige Abschnitte oder Abschnitte mit verminderter Lichtstärke zu erzeugen. Manchmal ist es wünschenswert, verschiedene Funktionen einer Mehrfunktions-Rückleuchte mit Hilfe undurchsichtiger Bänder voneinander zu trennen. Der optische Eindruck dieser Bänder kann mit Hilfe eines Rasterdruckes aus schwarzen Farbpigmenten, beispielsweise Rußpigmenten erzeugt werden. Häufig ist es auch wünschenswert, den Rand einer Funktion nicht scharfkantig zu begrenzen, sondern einen allmählichen Lichtabfall vorzusehen. In diesem Falle kann vorzugsweise die Rasterdichte von innen aus der Mitte einer Funktion heraus nach außen zum Funktionsrand hin zunehmen. Beispielsweise kann für einen solchen Rasterdruck ein Muster vorgesehen werden, wie es schematisch in Figur 5a dargestellt ist. Mit einem derartigen Rasterdruck kann auch der Rand der Rückleuchtenabdeckung markiert werden.

Alternativ kann im Zentrum einer Rückleuchtenfunktion eine höhere Rasterdichte vorgesehen werden. Die Bestrebungen gehen dahin, im gesamten Ausstrahlungsbereich einer Rückleuchtenfunktion eine möglichst gleichmäßige, dicht unter den zugelassenen Höchstwerten liegende Lichtstärke sicherzustellen, um einerseits die genannten Vorschriften zu erfüllen und um andererseits - soweit zulässig - größtmögliche Helligkeit und Kontraste zu erzielen. Die erfindungsgemäß vorgesehene Streulichtscheiben-Wirkung ermöglicht es, in allen Raumrichtungen, auch in den Randbereichen und hier insbesondere in den Eckzonen die zulässigen Höchst-Lichtstärken zu erreichen. Um in diesem Falle eine Überschreitung der Höchst-Lichtstärke in der Bezugsachse oder im Zentrum um die Bezugsachse herum zu vermeiden, kann es zweckmäßig sein, in diesem Zentrum einen Rasterdruck vorzusehen, dessen Rasterdichte von innen im Zentrum nach außen zum Rand der Rückleuchtenfunktion hin abnimmt. Ein Muster für einen derartigen Rasterdruck ist schematisch in Figur 5b dargestellt. Auch in diesem Falle kann der Rand einer Rückleuchtenfunktion wiederum und/oder der Rand der Rückleuchtenabdeckung mit Hilfe eines Streifens aus Licht-undurchlässigem Rasterdruck markiert werden.

Die an der Innenfläche der handelsüblichen Rückleuchtenabdeckungen einstückig angeformten lichtstreuenden optischen Elemente sind häufig für den Betrachter in Form einer dunkleren Linien-, Perlenschnur-, Gitter- oder Wabenstruktur erkennbar. Bei Bedarf kann auch an der erfindungsgemäßen Abdeckung ein entsprechender optischer Eindruck mit Hilfe einer angepaßten Lichtausgleichsschicht hervorgerufen werden, die einen Rasterdruck aufweist, der das Muster der bekannten Linien-, Perlenschnur-, Gitter- oder Wabenstruktur nachahmt. Ein solcher Rasterdruck ist schematisch mit Figur 5c dargestellt.

Grundsätzlich wird der Rasterdruck in solchen Flächenabschnitten vorgesehen, in denen eine Lichtschwächung vorgenommen werden soll. Eine in einer bestimmten Richtung zunehmende (abnehmende) Rasterdichte kann durch eine entsprechende Zunahme (Abnahme) von Rasterpunkten pro Flächeneinheit, durch Vergrößerung (Verkleinerung) der Rasterpunktfläche und/oder durch Anwendung von Farblacken mit höherer (niedriger) Pigmentkonzentration erreicht werden.

Die vorstehend genannten Lagen, Schichten oder Beschichtungen werden auf der ebenen Kunststoff-Folie oder auf einer vorher auf dieser ebenen Kunststoff-Folie aufgebrachten Lage/Schicht/Beschichtung mit Hilfe üblicher Beschichtungsmaßnahmen und/oder drucktechnischer Maßnahmen aufgebracht. Das Beschichten kann beispielsweise mit Hilfe von Rollcoater-Verfahren erfolgen. Als drucktechnische Maßnahmen kommen insbesondere Siebdruck und Offsetdruck in Betracht. Derartige Beschichtungsmaßnahmen und/oder drucktechnische Maßnahmen erfordern wesentlich weniger Aufwand als die bekannte einstückige Anformung von lichtstreuenden optischen Elementen an der Innenseite der Lichtscheibe. Insoweit erlaubt die Erfindung erhebliche Kosteneinsparungen bei der Herstellung von Rückleuchtenabdeckungen.

Die drei-dimensionale Verformung der ursprünglich ebenen, mit den vorstehend erläuterten Lagen, Schichten bzw. Beschichtungen versehenen Kunststoff-Folie in die Gestalt der fertigen Rückleuchtenabdeckung kann nach verschiedenen Verfahren erfolgen. Beispielsweise kann diese Verformung mit Hilfe des Thermoformverfahrens oder durch Umformung unter Einwirkung von Preßluft oder Vakuum erfolgen. Vorzugsweise ist eine schlagartige Umformung nach dem Höchstdruck-Verformungsverfahren gemäß EP 0 371 425 B1 vorgesehen. Dieses Höchstdruck-Verformungsverfahren gewährleistet bei den hier erforderlichen Umformungsgraden eine wesentlich höhere Produktivität als die anderen bekannten Umformungsverfahren.

Die nach dieser Verformung erhaltene, mit einer ein- oder mehrlagigen Beschichtung versehene Folie wird entsprechend dem Umriß der vorgesehenen Rückleuchtenabdeckung gestanzt und anschließend mit transparentem, thermoplastischem Kunststoff hinterspritzt, um eine Verstärkungsschicht zu erzeugen. Hierzu wird die verformte Folie typischerweise in ein Spritzgußwerkzeug eingelegt und auf der Farbseite mit dem transparenten Kunststoff hinterspritzt, wobei der Anguß zweckmäßigerweise im Bereich des Rückfahrscheinwerfers plaziert wird. Für diese Verstärkungsschicht kann vorzugsweise eine Schichtdicke von 0,5 bis 10 mm vorgesehen werden. Als thermoplastische, transparente Kunststoffe für die Verstärkungsschicht sind vorzugsweise thermoplastische Polycarbonate mit Molekulargewichten von 10.000 bis 60.000 oder thermoplastische Polyarylate mit Molekulargewichten von 10.000 bis 50.000, besonders bevorzugt mit Molekulargewichten von 15.000 bis 25.000, sowie thermoplastische Polymethylmethacrylate vorgesehen.

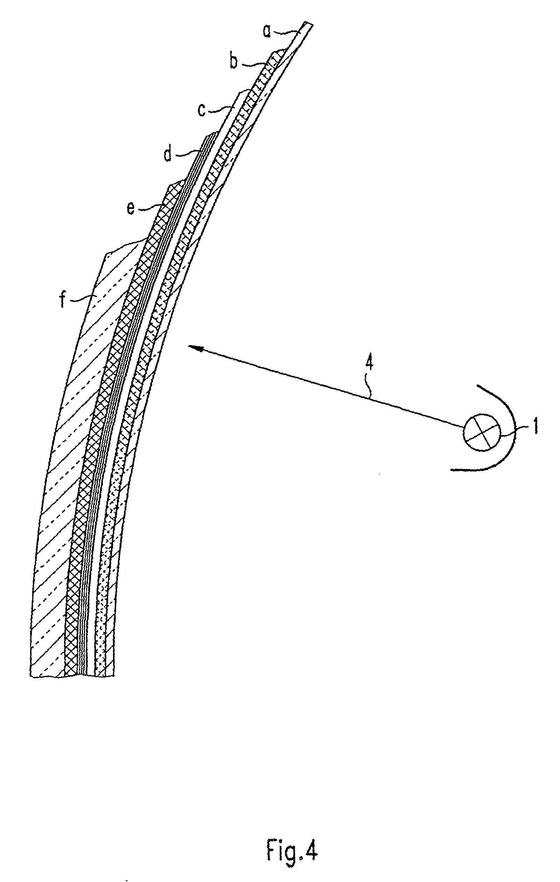

In Figur 4 ist schematisch ein bevorzugter Schichtenaufbau einer erfindungsgemäßen Rückleuchtenabdeckung dargestellt. In Richtung des Lichtstrahles 4 aus der Lichtquelle 1 ist vorzugsweise ein aufeinanderfolgender Schichtenaufbau aus nachstehenden Teilschichten vorgesehen:

- a) kratzfeste und/oder UV-beständige Schutzschicht;
- b) Streulichtscheibe aus Streupigment in einem Klarlack;
- c) transparente Kunststoff-Folie;
- d) mehrlagige Anordnung von Farbschichten;
- e) Lichtausgleichsschicht mit Rasterdruck entsprechend vorgegebenem Muster; und
- f) Verstärkungsschicht.

Die nachstehenden Beispiele dienen zur weiteren Erläuterung der Erfindung ohne diese einzuschränken.

**BEISPIEL 1:**

Als Ausgangsmaterial für die Streulichtscheibe dient eine 250 µm dicke Folie aus Polycarbonat auf Basis Bisphenol A mit einer relativen Viskosität von 1,32 (gemessen bei 20°C in Dichlormethan mit 0,5 g/100 ml) die gleichmäßig dispergiert 30 Gew.-% Glaskugeln aus "E-Glas" mit einem Kugeldurchmesser von 2 bis 3 µm enthält. Diese Folie weist eine Lichtdurchlässigkeit von 80 % und einen Halbwertswinkel von 15° auf. Zur Erzeugung einer Schutzschicht wird diese Folie zuerst auf einer Seite mit einer 30 %-igen Lösung von Polyvinylidenfluorid gelöst in DMF-Isophoron beschichtet. Daraufhin wird auf der anderen, noch nicht beschichteten Seite eine mehrlagige Anordnung von abschnittsweisen Farbschichten entsprechend den Signalfarben der Rückleuchtenfunktionen aufgebracht. Nach dem Bedrucken wird die ebene Folie nach dem bekannten Verfahren der Höchstdruck-Verformung gemäß EP 0 371 425 B1 umgeformt und anschließend entsprechend der für die Rückleuchtenabdeckung geforderten Kontur ausgestanzt. Die ausgestanzte, drei-dimensional verformte Folie wird in ein beidseitig glattes und poliertes Spritzgußwerkzeug eingelegt und auf der Farbseite mit einem transparenten aromatischen Polycarbonat hinterspritzt, wobei der Anguß im Bereich des Rückfahrscheinwerfers plaziert wird.

**BEISPIEL 2:**

Im wesentlichen wird das Verfahren nach Beispiel 1 wiederholt. Abweichend wird auf der mehrlagigen Anordnung von Farbschichten abschließend und zusätzlich eine Lichtausgleichsschicht aufgedruckt, die in einem 120er Raster ein Muster gemäß Figur 5a aufweist.

**BEISPIEL 3:**

Als thermoplastische, transparente Kunststoff-Folie dient eine beidseitig glatte, 375 µm dicke Folie aus UV-beständigem Polymethylmethacrylat mit einem Molekulargewicht von 30.000. Zur Erzeugung einer Streulichtscheibe wird diese Folie einseitig mit einem Klarlack auf Basis eines UV-vernetzbarem PU-modifiziertem Acrylatlack beschichtet, der als Streupigment Glaskugeln aus "E-Glas" mit einem Kugeldurchmesser von 2 bis 3 µm enthält. Dieser Auftrag des Streupigment enthaltenden Klarlackes wird noch zweimal wiederholt. Nach Vernetzung unter UV-Strahlung wird eine 420 µm dicke Streulichtscheibe erhalten, die eine Lichtdurchlässigkeit von 85 % und einen Halbwertswinkel von 12° aufweist. Anschließend wird die nicht beschichtete Seite der Polymethylmethacrylat-Folie mit einem mehrlagigen Farbauftrag sowie mit dem Raster einer Lichtausgleichsschicht bedruckt, wie das in Beispiel 2 angegeben ist. Das Verformen und Ausstanzen der verformten Folie erfolgt analog zu Beispiel 1. Anschließend wird die so bedruckte und drei-dimensional verformte Folie mit Polymethylmethacrylat mit einem Molekulargewicht von 25.000 hinterspritzt, wobei die Folie auf der Düsenseite eingelegt wird, und die Hinterspritzung durch eine Aussparung der Folie im Fenster des Rückscheinwerfers erfolgt.

**BEISPIEL 4:**

Als Ausgangsmaterial für die Streulichtscheibe dient eine 125 µm dicke, beidseitig glatte Folie aus aromatischem Polycarbonat, die mit 20 Gew.-% Hohlkugeln aus Glas mit einem Kugeldurchmesser von etwa 0,8 µm gefüllt ist; solche Hohlkugeln werden typischerweise zur Mikroverkapselung von FarbStoffen bei der Herstellung von Durchschreibpapieren verwendet. Diese Folie weist eine Lichtdurchlässigkeit von 85 % und einen Halbwertswinkel von 14° auf. Auf einer Seite dieser Folie werden nacheinander abschnittsweise die Signalfarben der verschiedenen Rückleuchtenfunktionen aufgedruckt. Auf diesen Farbschichten wird ein Überzug aus einer Schutzschicht aus einem transparenten UV-vernetzbarem Acrylatlack aufgebracht. Anschließend wird auf der noch nicht beschichteten Seite der Folie eine Lichtausgleichsschicht in Form eines Rasterdruckes mit einem Muster gemäß Figur 5c aufgebracht. Nach Ausstanzung und Verformung gemäß Beispiel 1 wird angrenzend an die Lichtausgleichsschicht transparentes Polycarbonat angespritzt, um die Verstärkungsschicht zu erzeugen.

**Patentansprüche**

1.   Mehrschichtige Abdeckung für Mehrfunktions-Rückleuchten an Straßenfahrzeugen, wobei die Abdeckung wenigstens aufweist:

-   eine drei-dimensional verformte Kunststoff-Folie, die durch Verformung einer ursprünglich ebenen, mit einer einlagigen oder mehrlagigen, farblich an die jeweilige Rückleuchtenfunktion angepaßten Beschichtung versehenen Folie mittels eines Höchstdruck-Verformungsverfahrens hergestellt ist und

-   wenigstens eine Verstärkungsschicht aus Kunststoff, die - nach ihrer Verformung - an die drei-dimensional verformte Kunststoff-Folie angespritzt worden ist,

**dadurch gekennzeichnet, daß**
die Kunststoff-Folie und/oder wenigstens ein Abschnitt von wenigstens einer Lage der Beschichtung als Streulichtscheibe ausgebildet ist, die für rotes Licht der Wellenlänge 0,7 µm einen Halbwertswinkel größer/gleich 10 Grad aufweist.

2.   Abdeckung nach Anspruch 1,
**dadurch gekennzeichnet, daß**
jede Streulichtscheibe eine Lichtdurchlässigkeit (ID) von wenigstens 70 % aufweist.

3.   Abdeckung nach Anspruch 1 oder 2,
**dadurch gekennzeichnet, daß**
die drei-dimensional verformte Kunststoff-Folie aus einem thermoplastischen, transparenten Folienmaterial besteht, ausgewählt aus:

-   aromatischen Polycarbonaten mit Molekulargewichten von 25.000 bis 200.000;

-   Styrol-Acrylnitril-Copolymerisaten mit Molekulargewichten von 20.000 bis 600.000;

-   Polymethylmethacrylaten mit einem Molekulargewicht von 10.000 bis 300.000.

4.   Abdeckung nach einem der Ansprüche 1 bis 3,
**dadurch gekennzeichnet, daß**
die drei-dimensional verformte Kunststoff-Folie eine Schichtdicke von 50 bis 700 µm, insbesondere eine Schichtdicke von 100 bis 500 µm aufweist.

5.   Abdeckung nach einem der Ansprüche 1 bis 4,
**dadurch gekennzeichnet, daß**
die Streulichtscheibe aus der Kunststoff-Folie besteht, die ein homogen dispergiertes Streupigment enthält.

**6.** Abdeckung nach Anspruch 5,
**dadurch gekennzeichnet, daß**
die Kunststoff-Folie 5 bis 30 Gew.-% Streupigment enthält, bezogen auf das Gesamtgewicht von Folienmaterial und Streupigment.

**7.** Abdeckung nach einem der Ansprüche 1 bis 4,
**dadurch gekennzeichnet, daß**
die Streulichtscheibe aus einer oder mehreren, auf der Kunststoff-Folie abgeschiedenen Lackschichten besteht, die ein homogen dispergiertes Streupigment enthält.

**8.** Abdeckung nach Anspruch 7,
**dadurch gekennzeichnet, daß**
die Lackschicht eine Klarlackschicht ist, die 30 bis 50 Gew.-% Streupigment enthält, bezogen auf das Gesamtgewicht an Lackschicht und Streupigment.

**9.** Abdeckung nach einem der Ansprüche 5 bis 8,
**dadurch gekennzeichnet, daß**
als Streupigment dienen:

- Vollkugeln aus "E-Glas" mit einem Kugeldurchmesser von 2 bis 5 $\mu$m;

- Hohlkugeln aus Glas oder einem anderen dauerhaften Material, die ansonsten zur Mikroverkapselung eingesetzt werden;

- Perlglanzpigmente mit einem mittleren Partikeldurchmesser kleiner/gleich 5 $\mu$m.

**10.** Abdeckung nach einem der Ansprüche 1 bis 9,
**dadurch gekennzeichnet, daß**
die Beschichtung auf der Kunststoff-Folie aus mehreren Lagen bzw. Schichten besteht, die unterschiedliche Lackbindemittel enthalten, die sich in ihrem Brechungsindex unterscheiden.

**11.** Abdeckung nach Anspruch 10,
**dadurch gekennzeichnet, daß**
die mehrlagige Beschichtung Sandwich-artig zwischen der Kunststoff-Folie und der Verstärkungsschich angeordnet ist.

**12.** Abdeckung nach einem der Ansprüche 1 bis 11,
**dadurch gekennzeichnet, daß**
wenigstens ein Abschnitt einer Lage der Beschichtung als reflektierende Schicht ausgebildet ist, mit welcher eine Rückstrahlerfunktion realisiert ist.

**13.** Abdeckung nach Anspruch 12,
**dadurch gekennzeichnet, daß**
die reflektierende Schicht als Lackschicht ausgebildet ist, die in einem zur Erzielung einer Reflexionswirkung erforderlichen Ausmaß mit Glanzpigmenten gefüllt ist.

**14.** Abdeckung nach Anspruch 13,
**dadurch gekennzeichnet, daß**
die Glanzpigmente aus Aluminium- oder Silberbronzen, metallisierten Glaskugeln, Perlglanzpigmenten oder deren Mischungen ausgewählt sind.

**15.** Abdeckung nach einem der Ansprüche 1 bis 14,
**dadurch gekennzeichnet, daß**
die mehrlagige Beschichtung auch eine Schutzschicht einschließt, die vor UV-Strahlung schützt und/oder die Kratzfestigkeit erhöht.

**16.** Abdeckung nach einem der Ansprüche 1 bis 15,
**dadurch gekennzeichnet, daß**

die mehrlagige Beschichtung eine Lichtausgleichsschicht einschließt, die einen, einem vorgegebenen Muster folgenden Rasterdruck aufweist.

**17.** Abdeckung nach Anspruch 16,
**dadurch gekennzeichnet, daß**
das Rasterdruckmuster eine Rasterdichte aufweist, die von innen aus der Mitte einer Rückleuchtenfunktion heraus nach außen zum Rückleuchtenfunktions-Rand hin zunimmt (vgl. Fig. 5a).

**18.** Abdeckung nach Anspruch 16,
**dadurch gekennzeichnet, daß**
das Rasterdruckmuster eine Rasterdichte aufweist, die vom Rand einer Rückleuchtenfunktion aus zum Zentrum dieser Rückleuchtenfunktion hin zunimmt (vgl. Fig. 5b).

**19.** Abdeckung nach Anspruch 16,
**dadurch gekennzeichnet, daß**
das Rasterdruckmuster eine Linien-, Perlenschnur-, Gitter- oder Wabenstruktur nachahmt (vgl. Fig. 5c).

**20.** Abdeckung nach einem der Ansprüche 1 bis 19,
**dadurch gekennzeichnet, daß**
die mehrschichtige Abdeckung in Richtung eines Lichtstrahles aus einer Lichtquelle einen aufeinanderfolgenden Schichtenaufbau aus nachstehenden Teilschichten aufweist:

a) kratzfeste und/oder UV-beständige Schutzschicht;
b) Streulichtscheibe aus Streupigment in einem Klarlack;
c) transparente Kunststoff-Folie;
d) mehrlagige Anordnung von Farbschichten;
e) Lichtausgleichsschicht mit Rasterdruck entsprechend vorgegebenem Muster; und
f) Verstärkungsschicht.

## Claims

**1.** A multilayered cover for multifunctional tail lights for motor vehicles,
whereby the cover comprises at least:

- a three-dimensionally deformed plastic film that has been obtained by deforming by means of a ultra-high pressure deformation process an originally flat film that has a single-layered or multilayered coating whose color has been matched to the tail light function in question, and
- at least one reinforcement layer made of plastic which is injection-molded onto the three-dimensionally deformed plastic film subsequently to the deformation thereof,

**characterized in that**
the plastic film and/or at least one section of at least one layer of the coating is formed as a light diffuser plate comprising a half value angle equal to or greater than $10°$, when measuring with red light having a wavelength of $0.7\ \mu m$.

**2.** The cover according to claim 1,
**characterized in that**
each light diffuser plate has a light transmission (ID) of at least 70 %.

**3.** The cover according to claim 1 or 2,
**characterized in that**
the three-dimensionally deformed plastic film consists of a thermoplastic transparent film material selected from:

- aromatic polycarbonates having molecular weights of from 25,000 to 200,000;
- styrene acrylonitrile copolymers having molecular weights of from 20,000 to 600,000;
- polymethyl methacrylates having molecular weights of from 10,000 to 300,000.

**4.** The cover according to anyone of claims 1 to 3,
**characterized in that**
the three-dimensionally deformed plastic film has a layer thickness of from 50 μm to 700 μm, especially a layer thickness of from 100 μm to 500 μm.

**5.** The cover according to anyone of claims 1 to 4,
**characterized in that**
the light diffuser plate consists of the plastic film that contains a homogeneously dispersed scattering pigment.

**6.** The cover according to claim 5,
**characterized in that**
the plastic film contains 5 % to 30 % by weight of scattering pigment, based on the total weight of the film material and of the scattering pigment.

**7.** The cover according to anyone of claims 1 to 4,
**characterized in that**
the light diffuser plate consists of one or more paint layers containing a homogeneously dispersed scattering pigment and deposited on the plastic film.

**8.** The cover according to claim 7,
**characterized in that**
the paint layer is a clear lacquer layer containing 30 % to 50 % by weight of scattering pigment, based on the total weight of the paint layer and of the scattering pigment.

**9.** The cover according to anyone of claims 5 to 8,
**characterized in that**
the scattering pigment comprises:

- (solid) glass beads made of low-alkali glass (so called E-glass) having a diameter of from 2 μm to 5 μm;
- hollow beads of the type employed for microencapsulation and made of glass or of another durable material;
- pearlescent pigments having a mean particle diameter equal to or smaller than 5 μm.

**10.** The cover according to anyone of claims 1 to 9,
**characterized in that**
the coating on the plastic film consists of several layers that contain different paint binders differing from each other in their refractive indices.

**11.** The cover according to claim 10,
**characterized in that**
the multilayered coating is arranged sandwich-like between the plastic film and the reinforcement layer.

**12.** The cover according to anyone of claims 1 to 11,
**characterized in that**
at least one section of a layer of the coating is formed as a reflecting layer which provides a tail light reflector function.

**13.** The cover according to claim 12,
**characterized in that**
the reflecting layer is formed as a paint layer filled with gloss pigments in an amount sufficient to provide a reflector function.

**14.** The cover according to claim 13,
**characterized in that**
the gloss pigments are selected from aluminum bronzes or silver bronzes, metallized glass beads, pearlescent pigments or mixtures thereof.

**15.** The cover according to anyone of claims 1 to 14,
**characterized in that**

the multilayered coating additionally includes a protective layer providing protection against ultraviolet radiation and/or increasing a scratch resistance.

16. The cover according to anyone of claims 1 to 15,
**characterized in that**
the multilayered coating includes a light-compensating layer comprising an imprint screen image corresponding to a given pattern.

17. The cover according to claim 16,
**characterized in that**
the screen image pattern comprises a screen density increasing of from the inner center of a tail light reflection function towards the outer edge of the tail light reflection function (see Figure 5a).

18. The cover according to claim 16,
**characterized in that**
the screen image pattern comprises a screen density increasing of from the edge of a tail light reflection function towards the center of this tail light reflection function (see Figure 5b).

19. The cover according to claim 16,
**characterized in that**
the screen image pattern structure resembles a line structure, a string of pearls structure, a grating structure or a honeycomb structure (see Figure 5c).

20. The cover according to anyone of claims 1 to 19,
**characterized in that**
the multilayered cover comprises a structure of consecutive layers arranged such that a light beam emanating from a light source passes successively

a) a scratch-proof and/or UV-resistant protective layer;
b) a light diffusing plate consisting of a clear lacquer layer containing scattering pigments;
c) a transparent plastic film;
d) a multilayered arrangement of colored layers;
e) a light compensating layer having an imprint screen image corresponding to a given pattern; and
f) a reinforcement layer.

**Revendications**

1. Un recouvrement à plusieurs couches pour les feux arrière multifonctions de véhicules routiers, ce recouvrement comprenant

- au moins une feuille de matières plastiques déformée en trois dimensions, obtenue par déformation au moyen d'un procédé de déformation sous pression ultra-haute d'une feuille qui est à l'origine plate et qui est munie d'un revêtement à une ou à plusieurs couches dont la couleur est adaptée à la fonction respective du feu arrière et
- au moins une couche de renforcement de matières plastiques qui a été pulvérisée sur la feuille de matières plastiques déformée en trois dimensions après cette déformation

**caractérisé en ce que**
cette feuille de matières plastiques et/ou au moins une portion d'au moins une couche du revêtement est formée en tant que plaque de diffusion de la lumière dont l'angle de demi-valeur mesuré à lumière rouge ayant une longueur d'onde de 0,7 µm est égal ou supérieur à 10°.

2. Le recouvrement conformément à la revendication 1
**caractérisé en ce que**
chaque plaque de diffusion de la lumière a une transmission de lumière (ID) d'au moins 70%.

3. Le recouvrement conformément à la revendication 1 ou 2,

**caractérisé en ce que**
la feuille de matières plastiques déformée en trois dimensions est fabriquée en une matière thermoplastique transparente choisie parmi :

- les polycarbonates aromatiques ayant un poids moléculaire compris entre 25.000 et 200.000 ;
- les copolymères de styrène-acrylonitrile ayant un poids moléculaire compris entre 20.000 et 600.000 ;
- les polyméthyle methacrylates ayant un poids moléculaire compris entre 10.000 et 300.000 ;

**4.** Le recouvrement conformément à une des revendications 1 à 3,
**caractérisé en ce que**
la feuille de matières plastiques déformée en trois dimensions présente une épaisseur de couche entre 50 μm et 700μm, et plus particulièrement une épaisseur de couche entre 100 μm et 500 μm.

**5.** Le recouvrement conformément à une des revendications 1 à 4,
**caractérisé en ce que**
la plaque de diffusion de la lumière est fabriquée de la feuille de matières plastiques comprenant un pigment de dispersion réparti de manière homogène.

**6.** Le recouvrement conformément à la revendication 5,
**caractérisé en ce que :**

la feuille de matières plastiques comprend entre 5% et 30% en poids du pigment de dispersion par rapport au poids total de la feuille et du pigment de dispersion.

**7.** Le recouvrement conformément à une des revendications 1 à 4,
**caractérisé en ce que**
la plaque de diffusion de la lumière comprend une ou plusieurs couche(s) de peinture contenant un pigment de dispersion réparti de manière homogène qui est déposé sur la feuille de matières plastiques.

**8.** Le recouvrement conformément à la revendication 7,
**caractérisé en ce que :**

la couche de peinture est une couche en vernis claire contenant entre 30 à 50% en poids de pigment de dispersion par rapport au poids total de la couche de peinture et du pigment de dispersion.

**9.** Le recouvrement conformément à une des revendications 1 à 8,
**caractérisé en ce que** :

le pigment de dispersion comprend

- des perles de verre en verre non alcalin (dit verre E) d'un diamètre entre 2 μm et 5 μm ;
- des perles creux en verre ou un autre matériau durable tel qu'on l'utilise pour la microencapsulation ;
- des pigments de lustre nacré dont le diamètre moyen des particules est égal ou inférieur à 5 μm ;

**10.** Le recouvrement conformément à une des revendications 1 à 9,
**caractérisé en ce que :**

le revêtement du film en matières plastiques comprend plusieurs couches qui contiennent de différents liants de peinture qui se distinguent l'un de l'autre par leur indice de réfraction.

**11.** Le recouvrement conformément à la revendication 10,
**caractérisé en ce que :**

le revêtement à plusieurs couches est arrangé en sandwich entre la feuille en matières plastiques et la couche de renforcement.

**12.** Le recouvrement conformément à une des revendications 1 à 11,
**caractérisé en ce qu' :**

au moins une portion d'une couche du revêtement est une couche réfléchissante assurant la fonction de réflecteur du feu arrière.

**13.** Le recouvrement conformément à la revendication 12,
**caractérisé en ce que** :

la couche réfléchissante est une couche de peinture remplie de pigments brillants en quantité suffisante pour obtenir un effet réfléchissant.

**14.** Le recouvrement conformément à la revendication 13,
**caractérisé en ce que** :

les pigments brillants sont choisis parmi les bronzes d'aluminium ou d'argent, les perles de verre métallisé, les pigments de lustre nacré ou les mélanges de ceux-ci.

**15.** Le recouvrement conformément à une des revendications 1 à 14,
**caractérisé en ce que :**

le revêtement à plusieurs couches comprend également une couche protectrice qui protège contre le rayonnement U.V. et/ou augmente la résistance à l'abrasion.

**16.** Le recouvrement conformément à une des revendications 1 à 15,
**caractérisé en ce que** :

le revêtement à plusieurs couches comprend une couche compensatrice de lumière qui est munie d'une image écran suivant un dessin donné.

**17.** Le recouvrement conformément à la revendication 16,
**caractérisé en ce que** :

le dessin de l'image écran présente une densité qui augmente à partir du centre intérieur d'une fonction de feu arrière vers le bord extérieur de la fonction de feu arrière, voir figure 5a.

**18.** Le recouvrement conformément à la revendication 16,
**caractérisé en ce que** :

le dessin de l'image écran présente une densité qui augmente à partir du bord d'une fonction de feu arrière vers le centre intérieur de la fonction de feu arrière, voir figure 5b.

**19.** Le recouvrement conformément à la revendication 16,
**caractérisé en ce que :**

le dessin de l'image écran ressemble à une structure de ligne, une structure de rang de perles, à une structure de grillage ou une structure de nids d'abeille, voir fig. 5c.

**20.** Le recouvrement conformément à une des revendications 1 à 19,
**caractérisé en ce que** :

le recouvrement à plusieurs couches comprend une structure de couches consécutives arrangées de manière qu'un faisceau de lumière émis par une source de lumière traverse successivement les couches suivantes :

a) une couche protectrice résistant à l'abrasion et aux rayons U.V. ;
b) une plaque diffusant la lumière et comprenant une couche en vernis clair qui contient des pigments de dispersion :
c) une feuille en matières plastiques transparente ;
d) un arrangement multicouches de couches en couleur ;
e) une couche compensatrice de lumière munie d'une image écran suivant un dessin donné ;
f) une couche de renforcement.

Fig.1

Fig.2a

Fig.2b

Fig.3

Fig.4

Fig.5a

Fig.5b

Fig.5c